# EUROPEAN PATENT APPLICATION

(11) **EP 2 123 935 A1**
(43) Date of publication of application: **25.11.2009**
(21) Application number: 08425355.8
(22) Date of filing: 20.05.2008
(51) Int. Cl.: F16H 1/46, F16D 1/08, F16B 3/00, F16B 3/04

(54) **Epicyclic reduction gear**

(71) Applicant: Tecnoingranaggi Riduttori S.r.l. con Unico Socio, 40017 San Giovanni in Persiceto (IT)
(72) Inventor: Cognigni, Enzo, 40129 Bologna (IT)
(74) Representative: Bergadano, Mirko

(57) **Abstract**

The epicyclic reduction gear (10) includes a reduction stage (SP1 and/or SP2) provided with a planet-gear-carrier (29) displaying a through hole (29a) adapted to accommodate a segment of a sun-gear-carrier shaft (33). The main feature of the present invention consists in that a coupling is provided inside the hole (29a), between the planet-gear-carrier (29) and the shaft (33) defined by at least one pin (31) inserted between the shaft (33) and the internal wall of the hole (29a).

## Description

The present invention relates to an epicyclic reduction gear.

It is known that the epicyclic reduction gear is simply a transmission member of the motion between two shafts by means of a series of reduction stages. Currently, the transmission of the motion between a sun-gear-carrier shaft and a planet-gear-carrier member is made by driving with interference a segment of the sun-gear-carrier shaft into a hole of the planet-gear-carrier member. It is apparent that such a coupling is not very safe because a slipping between the two elements may occur due to the high values of the transmitted torque (and specifically of the starting torque) and furthermore the temperature value may also facilitate such a slipping.

In order to solve such a problem between the aforesaid two elements, some manufacturers make a grooved coupling which can however be subject to material wear over the course of time and thus to an increase of backlash and inevitably to an increase of noise.

Thus, it is the main object of the present invention to make an epicyclic reduction gear which is free from the aforesaid drawbacks and which specifically provides for an effective coupling between the sun-gear-carrier shaft and the planet-gear carrier member.

According to the present invention, an epicyclic reduction gear is made according to the features claimed in claim 1.

The present invention will now be described with reference to the accompanying drawings, which show a non-limitative embodiment thereof, in which:
- figure 1 is a section view of an epicyclic reduction gear made according to the principles of the present invention;
- figure 2 is a section view on an enlarged scale of a part of the reduction gear in figure 1; and
- figure 3 is a sectional view on an enlarged scale of a detail of the reduction gear in figure 1.

A precision epicyclic reduction gear of a known type will be described to better understand the present invention.

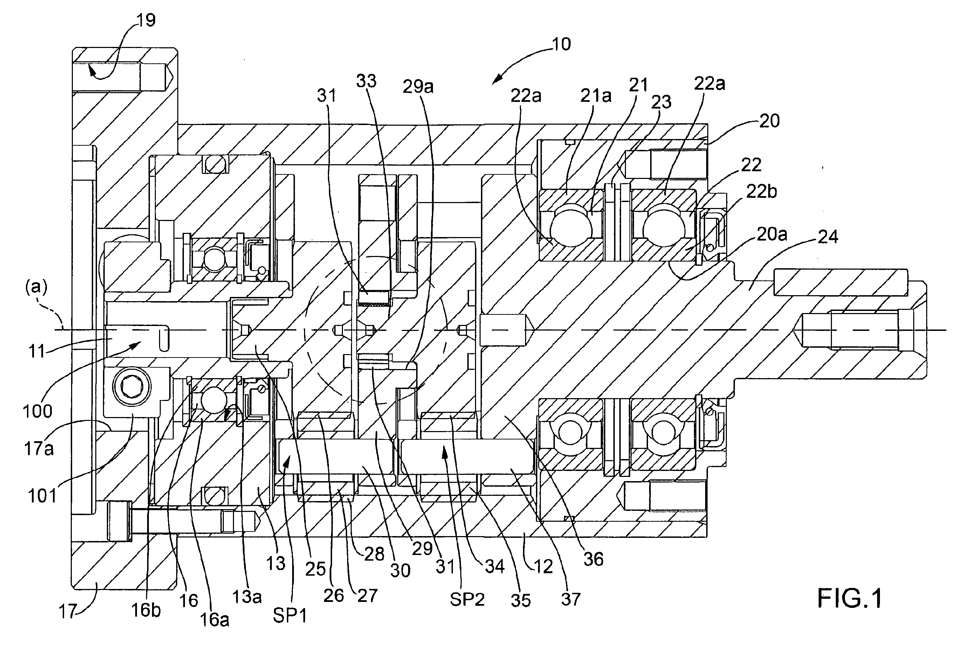

With reference to figure 1, numeral 10 indicates as a whole an epicyclic reduction gear.

The motion is transmitted to the epicyclic reduction gear 10 by a transmission shaft 11, mechanically connected to a motor assembly (not shown).

The transmission shaft 11 displays a longitudinal symmetry axis (a), which is also the longitudinal symmetry axis of the reduction gear 10.

In a known manner, the epicyclic reduction gear 10 includes an essentially tubular external casing 12. The external casing 12 is closed, at a first end thereof, by an essentially annular-shaped element 13.

As shown in figure 1, the element 13 displays a central hole 13a adapted to accommodate a bearing 16.

The external cage 16a of the bearing 16 is fixed by known means to the wall of the central hole 13a, while the internal cage 16b of the bearing 16 is made integral (by usual means) to an elastic transmission bushing 100.

The reduction gear 10 is closed on the side of the elastic bushing 100 by a lid 17 screwed by a plurality of screws 18 to the flange 14 and to the element 13. Furthermore, a series of threaded holes 19 (only one of which is shown in figure 1), which are used to fix the motor assembly (not shown), is provided on the lid 17.

As shown in figure 1, the lid 17 displays a central hole 17a which accommodates an end portion of the transmission shaft 11, the elastic bushing 100 and a fastening clamp 101, which is used to fasten the elastic bushing 100 itself onto the transmission shaft 11. An annular element 20 is fixed inside the external casing 12 on the opposite side of the lid 17. Indeed, the element 20 displays a central hole 20a which accommodates a pair of bearings 21, 22 separated by spacers 23.

As known methods, the external cages 21a and 22a of the bearings 21, 22, respectively, are fixed to the wall of the hole 20a, while the internal cages 21b, 22b are integral with an output shaft 24 mechanically connected to a final user (not shown).

Two reduction stages SP1 and SP2 are provided in the precision epicyclic reduction gear 10 between the elements 13 and 20 (see below). The elastic transmission bushing 100 is integral (by the usual means) with a shaft 25 which carries a sun-gear 26 of the first reduction stage SP1. The sun-gear 26 meshes with a plurality of planet-gears 27 (only one of which is shown in figure 1), which in turn mesh with a fixed ring gear 28 provided on the internal wall of the casing 12.

Each planet-gear 27 is mechanically connected to a planet-gear-carrier 29 by means of a corresponding pivot 30.

By summarizing, the first reduction stage SP1 includes the sun-gear 26, the planet-gears 27, the fixed ring gear 28, the planet-gear-carrier 29 and the pivots 30.

The planet-gear-carrier 29 displays a through hole 29a adapted to accommodate a segment of a shaft 33. The main feature of the present invention consists in that a coupling is provided within the hole 29a between the planet-gear-carrier 29 and the shaft 33 defined by two pins 31 of the spiralled type. For this reason, two diametrically opposite semi-cylindrical recesses 32 facing corresponding recesses 40, also semi-cylindrical and obtained on the shaft 33, are made in the internal wall of the hole 29a. The pair consisting of recess 32 and recess 40 defines a cylindrical seat 41 for a corresponding pin 31. It is worth noting that the spiralled pins are elastically deformable and thus the pins 31 are constantly in forced contact with the recesses 32 and 40.

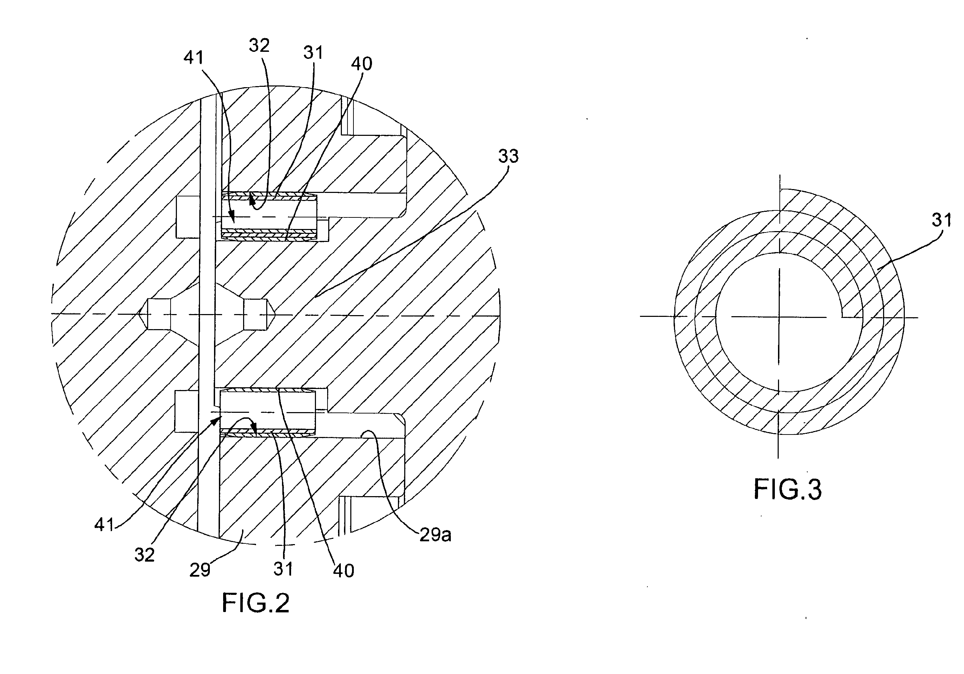

With reference to figure 3, the pins 31 are of the spiralled type(as mentioned above) and display several windings.

The shafts 25 and 33 have the same longitudinal symmetry axis (a).

The shaft 33 further provides for a sun-gear 34 of the second reduction stage SP2.

The sun-gear 34 grips a plurality of planet-gears 35 (only one of which is shown in figure 1), which simultaneously mesh with the mentioned fixed ring gear 28.

Each planet-gear 35 is mechanically connected to a planet-gear-carrier 36 by means of a corresponding pivot 37.

By summarizing, the second reduction stage SP2 includes the sun-gear 34, the planet-gears 35, the fixed ring gear 28, the planet-gear-carrier 36 and the pivots 37.

The sun-gear 36 is integral with the mentioned output shaft 24 by known means.

Thus, the speed of the transmission shaft 11 has undergone two reductions at the two reduction stages SP1, SP2.

The advantages of the above described coupling between the planet-gear-carrier 29 and the shaft 33 are the following:
- easy assembly of the pins 31;
- effective transmission of the torque at full rate;
- effective transmission of the starting torque as apparent due to the elastic deformation to which the pins 31 are subjected;
- low wear of the pins 31;
- impossible slipping between the planet-gear-carrier 29 and the shaft 33; and
- easy replacement of the pins 31.

## Claims

1. An epicyclic reduction gear (10) including at least one reduction stage (SP1 and/or SP2) provided with a planet-gear-carrier (29) displaying a through hole (29a) adapted to accommodate a segment of a sun-gear-carrier shaft (33), **characterized in that** a coupling is provided within said hole (29a) between said planet-gear-carrier (29) and said shaft (33) defined by at least one pin (31) inserted between said shaft (33) and the internal wall of said hole (29a).

2. An epicyclic reduction gear (10) as claimed in claim 1, **characterized in that** said pin (31) is of the spiralled type.

3. An epicyclic reduction gear (10) as claimed in claim 1 and/or 2, **characterized in that** at least one cylindrical seat (41) for said one corresponding pin (31) is obtained between said shaft (33) and the internal wall of said hole (29a).

4. An epicyclic reduction gear (10) as claimed in claim 3, **characterized in that** said seat (41) is defined by a first semi-cylindrical recess (32) obtained on the internal wall of said hole (29a) and a second recess (40) obtained on said shaft (33).

5. An epicyclic reduction gear (10) as claimed in claim 4, **characterized in that** it includes two reciprocally diametrically opposite seats (41).
